# EUROPÄISCHE PATENTANMELDUNG

(11) **EP 2 058 205 A1**
(43) Veröffentlichungstag der Anmeldung: **13.05.2009**
(21) Anmeldenummer: 07021935.7
(22) Anmeldetag: 12.11.2007
(51) Int. Cl.: B60W 50/08

(54) **Steuereinheit und Verfahren zur Steuerung wenigstens einer Antriebskomponente eines motorgetriebenen Fortbewegungsmittels sowie Manipulationsverfahren hierfür**

(71) Anmelder: Continental Automotive GmbH, 30165 Hannover (DE)
(72) Erfinder: Bocionek, Siegfried, Dr., 93049 Regensburg (DE); Graf, Armin, 92224 Amberg (DE); Schopp, Gerhard, Dr., 93186 Pettendorf (DE)

(57) **Zusammenfassung**

Es ist eine Aufgabe der vorliegenden Erfindung, einen einfachen, insbesondere auch für Endbenutzer (26) interessanten Weg für eine Individualisierung eines motorgetriebenen Fortbewegungsmittels (1) anzugeben (z. B. Veränderung des "Motorsounds"). Gemäß der Erfindung ist eine Steuereinheit (10) zur Steuerung wenigstens einer Antriebskomponente (3) des Fortbewegungsmittels (1)vorgesehen, umfassend einen Steuerrechner (12), der in Zusammenwirkung mit einer Speichereinrichtung (14) und Eingabe/Ausgabemitteln (16) die Antriebskomponente (3) auf Basis einer in der Speichereinrichtung (14) abgelegten Steuersoftware (18) steuert, wobei die Steuereinheit (10) für eine nachträgliche Veränderbarkeit einer Steuercharakteristik durch Laden einer individuellen Manipulationssoftware (20) in die Speichereinrichtung (14) geeignet ausgebildet ist.

## Beschreibung

Die vorliegende Erfindung betrifft eine Steuereinheit nach dem Oberbegriff des Anspruchs 1 bzw. ein entsprechendes Steuerverfahren nach dem Oberbegriff des Anspruchs 9.

Steuereinheiten der hier interessierenden Art sind beispielsweise im Bereich der modernen Automobiltechnik üblich geworden. Bei modernen Kraftfahrzeugen ist zumeist ein elektronisches Motorsteuergerät zur Steuerung wenigstens einer Antriebskomponente vorgesehen, umfassend einen Steuerrechner, der in Zusammenwirkung mit einer Speichereinrichtung und Eingabe/Ausgabemitteln die Antriebskomponente (z. B. Aktor(en) im Bereich von Brennkraftmaschine, Getriebe, Bremsen etc.) auf Basis einer in der Speichereinrichtung abgelegten Steuersoftware steuert. Der Steuerrechner, die Speichereinrichtung und die Eingabe/Ausgabemittel (Schnittstelleneinrichtung) sind hierbei zumeist baulich zu einem "Mikrocontroller" zusammengefasst, der durch eine oder mehrere integrierte Schaltungen implementiert ist. Die Eingabe/Ausgabemittel dienen hierbei zur Signaleingabe/ausgabe von/an Sensoren bzw. Aktoren des betreffenden Kraftfahrzeugs.

Die Speichereinrichtung bekannter Motorsteuergeräte kann neben einem Nur-Lese-Speicher, in welchem das eigentliche Steuerprogramm abgelegt ist, auch einen Lese-Schreib-Speicher umfassen, in welchem z. B. während des Motorbetriebs anfallende Diagnosedaten für eine spätere Auswertung abgelegt werden.

Die Steuersoftware umfasst ein eigentliches Steuerprogramm, auf dessen Basis das Steuergerät auf Eingaben (z. B. Sensorsignale wie Motordrehzahl, Fahrpedalstellung etc.) mit entsprechenden Ausgaben (z. B. Steuersignale für Kraftstoffinjektoren, Drosselklappensteller etc.) reagiert.

Steuereinheiten und Steuerverfahren der vorstehend erläuterten Art sind in der Praxis vor allem deshalb sehr vorteilhaft, weil auch sehr komplexe Steuerungsfunktionalitäten damit in vergleichsweise einfacher Weise (softwaregesteuert) bewältigt werden können. Vorteilhaft kann z. B. bei Kraftfahrzeugen eine Minimierung von Brennstoffverbrauch oder Abgasemissionen realisiert oder ein "Klopfen" der Brennkraftmaschine verhindert werden.

Bei vielen Endbenutzern von motorisierten Fortbewegungsmitteln wie insbesondere Kraftfahrzeugen oder Motorrädern besteht das Bedürfnis, das Fortbewegungsmittel zu "individualisieren". Daraus ist z. B. eine Vielzahl von Firmen entstanden, die sich mit dem Vertrieb von nicht-serienmäßigen Fahrzeugkomponenten zur Individualisierung bzw. zum so genannten "Tuning" beschäftigen. Mit derartigen, nachträglich erworbenen Komponenten lassen sich auch Antriebskomponenten wie Motor, Getriebe und Bremsen individuell modifizieren. Häufig steht hierbei als Motivation eine Leistungssteigerung und/oder eine Modifikation des Betriebsgeräusches ("Sound") des Fahrzeugs im Vordergrund. Hierfür geeignete Tuningkomponenten sind z. B. modifizierte mechanische Bauteile von Brennkraftmaschinen (z. B. Kolben, Nockenwellen, Auspuffteile etc.), deren Einbau vergleichsweise aufwändig ist und daher in der Regel von einer Fachwerkstatt durchgeführt werden muss.

Diese bekannten Methoden zur Individualisierung von Fortbewegungsmitteln sind außerdem in ihrer Wirkung mehr oder weniger begrenzt.

Es ist eine Aufgabe der vorliegenden Erfindung, einen einfachen, insbesondere auch für Endbenutzer interessanten Weg für eine Individualisierung eines motorgetriebenen Fortbewegungsmittels anzugeben.

Bei einer Steuereinheit der eingangs genannten Art wird diese Aufgabe dadurch gelöst, dass die Steuereinheit für eine nachträgliche Veränderbarkeit einer Steuercharakteristik durch Laden einer individuellen Manipulationssoftware in die Speichereinrichtung geeignet ausgebildet ist.

Das erfindungsgemäße Steuerungsverfahren ist dementsprechend dadurch gekennzeichnet, dass eine Steuercharakteristik durch Laden einer individuellen Manipulationssoftware in die Speichereinrichtung nachträglich veränderbar ist.

Die Erfindung ist prinzipiell für alle Arten von motorgetriebenen Fortbewegungsmitteln nutzbar, wie beispielsweise Kraftfahrzeugen, insbesondere PKWs, Motorrädern, Fluggeräten, Wasserfahrzeugen etc.

Der Antrieb des Fortbewegungsmittels kann z. B. eine Brennkraftmaschine (z. B. Ottomotor, Dieselmotor etc.) umfassen. Alternativ oder zusätzlich kann auch z. B. ein Elektromotor vorgesehen sein (z. B. in einem Elektroauto oder einem Hybridfahrzeug).

Bei der gesteuerten Antriebskomponente kann es sich dementsprechend z. B. um eine Brennkraftmaschine, einen Elektromotor, aber auch um Teile solcher Motoren bzw. solchen Motoren zugeordnete mechanische Einrichtungen wie Getriebe, Bremsen, Auspuffanlagen etc. handeln.

In einer bevorzugten Ausführungsform ist vorgesehen, dass die Veränderung der Steuercharakteristik eine Veränderung des Betriebsgeräusches des Fortbewegungsmittels bewirkt. Eine solche Veränderung des Betriebsgeräusches wird hierbei bevorzugt nicht unmittelbar durch allein zu diesem Zweck vorgesehene Komponenten (z. B. so genannte "Soundflaps" im Luftpfad oder Abgasstrang eines Kraftfahrzeuges) bewirkt, sondern als Folge einer veränderten Steuercharakteristik der ohnehin vorhandenen Motorkomponenten.

Eine insbesondere für Fortbewegungsmittel mit elektrischem Antrieb (also z. B. Elektroautos oder Hybridfahrzeuge) interessante Ausführungsform sieht vor, dass durch die nachträgliche Veränderung der Steuercharakteristik dem Bediener des Fortbewegungsmittels ein "akustisches Feedback" bei der Fortbewegung gegeben wird. Beispielsweise können bei höheren Geschwindigkeiten und/oder höheren Beschleunigungen lautere Geräusche vorgesehen sein, was die Aufmerksamkeit des Bedieners erhöht. Alternativ oder zusätzlich kann für ansonsten eher "lautlose Fahrzeuge" wie z. B. Elektroautos ganz allgemein ein "sportiver Sound" realisiert werden, gegebenenfalls auch abhängig vom aktuellen Betriebs- bzw. Fahrzustand.

In einer Ausführungsform ist vorgesehen, dass die Veränderung der Steuercharakteristik eine Veränderung des Ansprechverhaltens des Antriebs des Fortbewegungsmittels auf Bedienungsbetätigungen eines Benutzers bewirkt. Ein Beispiel hierfür wäre bei einem Kraftfahrzeug etwa eine modifizierte Ansteuerung eines automatischen Getriebes in Abhängigkeit von Motordrehzahl, Fahrpedalstellung etc.

In einer Ausführungsform ist vorgesehen, dass die Veränderung der Steuercharakteristik eine Veränderung der Leistungseigenschaften des Antriebs des Fortbewegungsmittels bewirkt. Der Begriff "Leistungseigenschaften" kann hierbei z. B. eine Maximalgeschwindigkeit oder eine maximale (physikalische) Leistung des Antriebsmotors bezeichnen.

In einer bevorzugten Ausführungsform ist vorgesehen, dass die Veränderbarkeit der Steuercharakteristik nur in einem vorbestimmt eingegrenzten Bereich ermöglicht ist. Diese Maßnahme ist insbesondere vorteilhaft, wenn die individuelle Veränderung der Steuercharakteristik dem Endanwender des Fortbewegungsmittels ermöglicht sein soll. Um in diesem Fall z. B. Bauteile zu schützen, Abgasgrenzen einzuhalten, Sicherheitsanforderungen zu genügen, Lärmemissionsvorschriften einzuhalten oder Verbrauchsgrenzen einzuhalten, ist es zweckmäßig, wenn durch die Steuereinheit bzw. die Steuersoftware ein besonders abgesicherter Parameterdatenbereich innerhalb der Steuerungsbedatung eingerichtet ist. Den Rahmen (Limitierungen) für die Einflüsse der von einem Endanwender vornehmbaren Verstellungen kann hierbei der Hersteller bzw. Steuergerätelieferant des betreffenden Fortbewegungsmittels festlegen.

In einer Ausführungsform ist vorgesehen, dass die Manipulationssoftware im Wesentlichen aus Parameterdatensätzen besteht, durch welche die serienmäßigen Parameterdatensätze entsprechend modifiziert werden. Ein eigentliches Steuerprogramm, welches unter Verwendung der betreffenden Steuerparameter mittels vorgegebener Algorithmen aus den Eingangssignalen entsprechende Ausgangssignale berechnet, ist bevorzugt unveränderlich vorgesehen. Durch diese Maßnahme können besonders weitreichende, unter Umständen sicherheitskritische oder anderweitig unerwünschte Manipulationen von vornherein ausgeschlossen werden.

Was das Laden der Manipulationssoftware in die Speichereinrichtung anbelangt, so kann hierfür z. B. eine Kabelverbindung zwischen der Steuereinheit und einer elektronischen Einrichtung bzw. einem Datenträger (z. B. Computer, Mobiltelefon, Navigationsgerät etc.) vorgesehen sein. Eine solche Kabelverbindung ist hierbei bevorzugt gemäß eines gängigen Standards (z. B. USB-Verbindung) vorgesehen.

In einer bevorzugten Ausführungsform ist ein kabelloses Laden der Manipulationssoftware in die Speichereinrichtung ermöglicht. Hierbei ist insbesondere an eine Funkverbindung zwischen der betreffenden Steuereinheit oder einer mit der Steuereinheit verbundenen Funkeinrichtung und einer elektronischen Einrichtung bzw. einem Datenträger zu denken. Auch für eine solche kabellose Verbindung können gemäß einer bevorzugten Ausführungsform gängige Standards wie z. B. Bluetooth, GSM etc. genutzt werden.

In einer bevorzugten Ausführungsform ist vorgesehen, dass beim Laden der Manipulationssoftware eine Validierung bzw. Überprüfung erfolgt. Eine solche Validierung bzw. Überprüfung kann sich z. B. auf eine erfolgte Bezahlung der Manipulationssoftware und das nicht verletzte Urheberrecht (Schutz vor Raubkopien) beziehen. Geeignete Validierungs- bzw. Überprüfungsalgorithmen können vorteilhaft als unveränderlicher Teil der in der Speichereinrichtung abgelegten Steuersoftware implementiert sein.

Insbesondere für den Fall, dass ein Endbenutzer des betreffenden Fortbewegungsmittels die Steuercharakteristik nachträglich verändern kann, ist es in der Praxis von Vorteil, wenn eine Bestellung und/oder eine Lieferung der Manipulationssoftware über eine Telekommunikationseinrichtung, insbesondere über Internet, ermöglicht ist. Eine solche Nutzung einer Telekommunikationseinrichtung erlaubt vorteilhaft in einfacher Weise auch eine Kundenregistrierung, eine Überwachung/Verfolgung ("Monitoring") der von Kunden durchgeführten Manipulationen und/oder andere nachträgliche ("after-sales") Aktivitäten bezüglich der Kundenbindung.

Die Erfindung wird nachfolgend anhand von Ausführungsbeispielen mit Bezug auf die beigefügten Zeichnungen weiter beschrieben. Es stellen jeweils schematisch dar:
- Fig. 1: ein Kraftfahrzeug mit einem elektronischen Steu- ergerät zur Steuerung einer Antriebs- Brennkraftmaschine,
- Fig. 2: den Aufbau des Steuergeräts,
- Fig. 3: die Lieferung einer Manipulationssoftware an ei- nen Benutzer des Kraftfahrzeugs, und
- Fig. 4: das Laden der Manipulationssoftware in das Steu- ergerät.

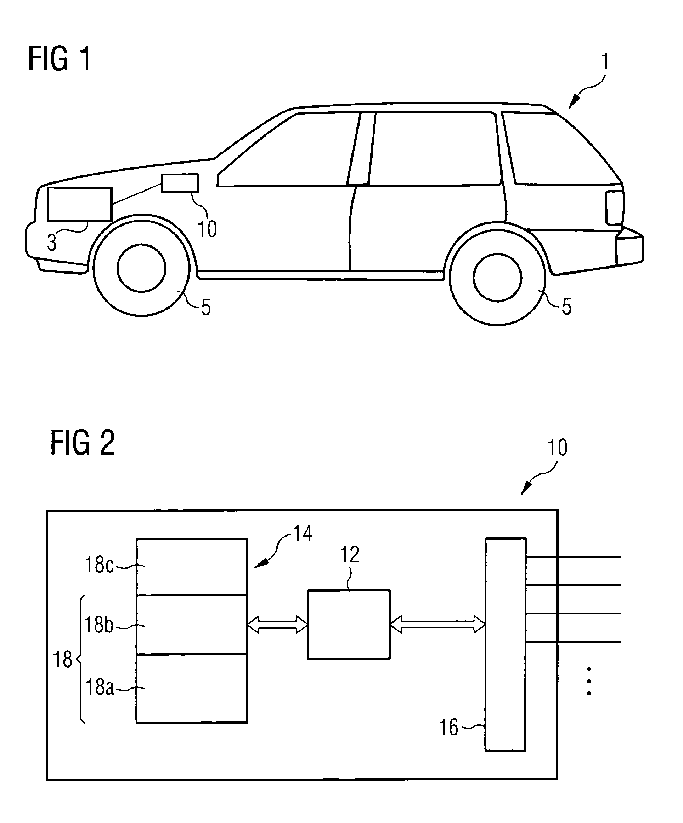

Fig. 1 zeigt ein Kraftfahrzeug 1, welches in herkömmlicher Weise mittels eines Motors 3 (hier: Brennkraftmaschine) angetrieben wird. Der Motor 3 umfasst eine Reihe von Motorsensoren (z. B. Kurbelwellenwinkelsensor, Drehzahlsensor, Öltemperatursensor etc.) und eine Reihe von Motoraktoren (z. B. Kraftstoffpumpe, Kraftstoffinjektoren, Drosselklappen etc.). Letztere Komponenten, deren Betrieb bzw. Zustand den Antriebszustand des Kraftfahrzeugs definieren, werden nachfolgend auch als "Antriebskomponenten" bezeichnet. Hierzu zählen jedoch nicht nur die erwähnten aktiven Komponenten des Motors 3 selbst, sondern auch weitere ansteuerbare Komponenten im Antriebsstrang (vom Motor 3 zu den Rädern 5 des Fahrzeugs 1 (z. B. Getriebe, Bremsen etc.).

Ein mit dem Motor 3 in Verbindung stehendes Steuergerät 10 dient zur Steuerung der motorseitigen Antriebskomponenten. Zur Steuerung des Getriebes und anderer aktiver Komponenten sind ein oder mehrere weitere Steuergeräte (nicht dargestellt) vorgesehen, die über ein Bussystem (z. B. CAN-Bus) miteinander kommunizieren.

Fig. 2 zeigt den Aufbau des als "Mikrocontroller" implementierten Steuergeräts 10. Es umfasst einen Steuerrechner 12, der in Zusammenwirkung mit einer Speichereinrichtung 14 und einer Schnittstelleneinrichtung 16 die betreffenden Antriebskomponenten auf Basis einer in der Speichereinrichtung 14 abgelegten Steuersoftware 18 steuert.

Zu diesem Zweck umfasst die Steuersoftware 18 ein fest eingespeichertes (unveränderliches) Steuerprogramm 18a mit geeigneten Funktionsalgorithmen, mit denen aus den über die Schnittstelleneinrichtung 16 eingegebenen Signalen (analoge und/oder digitale Daten) entsprechende Ausgangssignale (analog und/oder digital) über die Schnittstelleneinrichtung 16 zu den betreffenden Antriebskomponenten ausgegeben werden.

Die erforderlichen Berechnungen werden von dem Steuerrechner 12 entsprechend den durch das Steuerprogramm 18a vorgegebenen Algorithmen durchgeführt. Die Steuersoftware 18 umfasst des weiteren einen in Fig. 2 mit 18b bezeichneten Softwareteil mit Steuerparametern, die bei der Abarbeitung der Funktionsalgorithmen durch das Steuerprogramm 18a verwendet werden.

Die Eingangssignale der Berechnungen stammen nicht lediglich von den oben erwähnten motorseitigen Sensoren, sondern auch von weiteren Sensoren (z. B. für Fahrgeschwindigkeit, Lenkeinschlagwinkel etc.) bzw. Bedienelementen (z. B. Fahrpedal etc.) oder aus Speicherstellen des Speicherbereiches 18b bzw. eines zusätzlichen (ursprünglich freien) Speicherplatzes 18c der Speichereinrichtung 14, in welchem z. B. Zwischenergebnisse von Berechnungen und Diagnosedaten gepeichert bzw. aktualisiert werden können.

Der nachfolgend auch als "Steuercharakteristik" bezeichnete Zusammenhang zwischen den Eingangssignalen und den Ausgangssignalen bzw. die Abhängigkeit der Ausgangssignale von den Eingangssignalen wird somit durch die Steuersoftware 18 definiert.

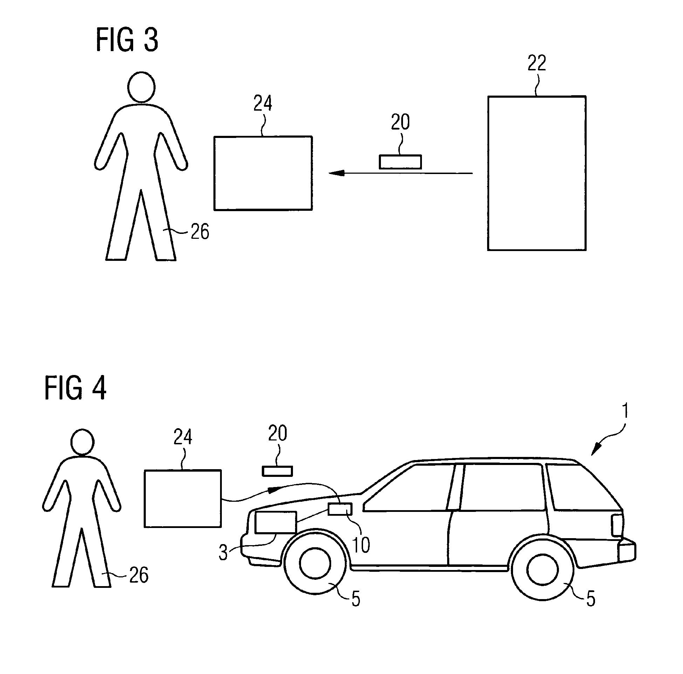

Eine Besonderheit des Steuergeräts 10 bzw. der darin enthaltenen Steuersoftware 18 besteht darin, dass es einem Benutzer des Fahrzeugs 1 ermöglicht ist, die Motoren- und Fahrgeräusche und/oder das Ansprechverhalten des Antriebs (in Reaktion auf Bedienungsbetätigungen des Benutzers) individuell zu verändern. Die hierfür vorgesehene Manipulation der Steuercharakteristik wird nachfolgend mit Bezug auf die Fig. 3 und 4 beschrieben.

Fig. 3 veranschaulicht die Lieferung einer Manipulationssoftware 20 an einen Endbenutzer des Kraftfahrzeugs 1.

Bei der beschriebenen Ausführungsform kann eine Auswahl und Bestellung z. B. eines bestimmten "Motorgeräusches" oder "Ansprechverhaltens" online erfolgen, etwa über Internet, Telefon, Mobiltelefon, Entertainment-Einheit in dem Kraftfahrzeug usw.

Als Ergebnis kann die entsprechende Manipulationssoftware 20 als solche oder eine Internet-Verknüpfung per E-Mail an eine vom Benutzer angegebene E-Mail-Adresse gesendet werden.

Die Darstellung von Fig. 3 veranschaulicht die Übermittlung der Manipulationssoftware 20 von einem Internetserver (enthaltend eine Datenbank) 22 über das Internet zu einem Computer 24 des Benutzers 26.

Fig. 4 veranschaulicht das vom Benutzer 26 durchzuführende Laden der individuellen Manipulationssoftware 20 in die Speichereinrichtung 14 des Steuergeräts 10.

Bei der dargestellten Ausführungsform erfolgt dieser Ladevorgang der Manipulationssoftware 20 (als eine oder mehrere Dateien) über eine herkömmliche USB-Kabelverbindung zwischen dem Computer 24 (z. B. Laptop) des Benutzers 26 und dem Motorsteuergerät 10, welches mit einer hierfür vorgesehenen Buchse ausgestattet ist. Alternativ könnte eine solche Standardbuchse auch an anderer Stelle im Fahrzeug angeordnet sein, insbesondere im Innenraum, und mit direkt oder indirekt über die Fahrzeugelektronik mit dem Steuergerät verbunden.

Anstatt des Computers 24 könnte bei diesem Schritt auch die Verwendung einer anderen geeigneten elektronischen Einrichtung (z. B. Mobiltelefon, mobiles Navigationsgerät etc.) vorgesehen sein.

Alternativ könnte außerdem eine kabellose Verbindung zwischen der betreffenden elektronischen Einrichtung des Benutzers 26 und dem Motorsteuergerät 10 ermöglicht sein. Dies wieder bevorzugt entsprechend eines Standards (z. B. "Bluetooth").

Bevorzugt ist beim Laden der Manipulationssoftware 20 auch eine Validierung bezüglich erfolgter Bezahlung der Software, nicht verletztem Urheberrecht oder dergleichen vorgesehen. Damit kann vorteilhaft sichergestellt werden, dass nur eine vom Benutzer 26 bezahlte und nicht illegal kopierte Manipulationssoftware letztlich in die Speichereinrichtung 14 gelangt. Hierfür geeignete Validierungs- bzw. Überprüfungsalgorithmen sind Fachleuten wohlbekannt und bedürfen daher hier keiner näheren Erläuterung. Bevorzugt enthält der unveränderliche Teil der Steuersoftware 18 einen hierfür geeigneten Algorithmus.

Bei dem Ladevorgang können zusätzlich auch "Downloads" in ein Getriebesteuergerät und/oder andere programmgesteuerte Elektronikkomponenten des Fahrzeugs 10 vorgesehen sein. Als Ergebnis eines erfolgreichen Ladevorganges liegt bei dem beschriebenen Ausführungsbeispiel ein zur Veränderung der Motorengeräusche geeigneter zusätzlicher Softwareteil (Manipulationssoftware 20) in der Speichereinrichtung 14 vor.

Die (nur nach erfolgreicher Validierung) in die Speichereinrichtung 14 geladene Manipulationssoftware 20 ersetzt bei dem beschriebenen Ausführungsbeispiel nicht das bereits zuvor gespeicherte Steuerprogramm 18a, sondern ergänzt dieses mit modifizierten Parameterdatensätzen, die von dem (unveränderlichen) eigentlichen Steuerprogramm 18a bei der Berechnung von Ausgangssignalen/daten in Abhängigkeit von Eingangssignalen/daten herangezogen werden. Alternativ könnten die neuen Parameter auch in einen freien Bereich des Speicherplatzes 18c geladen werden. Dies hätte z. B. den Vorteil, dass die alten Parameter nicht verloren gehen und somit in einfacher Weise rücksetzbar sind.

Ein unveränderlicher Teil der Steuergerätesoftware 18, z. B. ein bestimmter Bereich in den Parametersätzen, in welchem fest definierte Grenzen des "Ausmaßes der Manipulation" vorgegeben sind (bevorzugt durch Begrenzungen für die Wertebereiche von einzelnen Parametern), kann vorteilhaft sicherstellen, dass keine unerwünschten Manipulationen der Steuercharakteristik erfolgen können. Beispielsweise kann es bei einem mit einer Brennkraftmaschine angetriebenen Fortbewegungsmittel unerwünscht sein, dass vorbestimmte Abgasgrenzwerte und/oder Verbrauchswerte und/oder Lärmemissionswerte überschritten werden. Unabhängig davon sollten die durch den unveränderlichen Teil der Steuersoftware 18 vorgegebenen Grenzen auch sicherheitskritische Aspekte berücksichtigen. Bevorzugt ist daher durch den unveränderlichen Teil der Steuersoftware 18 ein besonders abgesicherter Parameterdatenbereich innerhalb der Steuerungsbedatung eingerichtet.

Die Steuergeräte-Software und eine besondere Berücksichtigung im Validierungsprozess stellen bei der beschriebenen Ausführungsform sicher, dass alle möglichen Kombinationen von Veränderungen im speziell dafür eingeschränkten Bereich liegen und zu keinen durch den Fahrzeughersteller oder Steuergerätehersteller unerwünschten Reaktionen/Einflüssen führen.

Das Ergebnis der Anwendung des Manipulationsverfahrens ist, dass sich das motorgetriebene Fortbewegungsmittel, z. B. ein "Volkswagen Golf", jetzt vom Motor- und Fahrgeräusch wie ein anderer PKW-Typ anhört (z. B. "Ferrari", mit Drehzahlschwankungen im Leerlauf, Resonanzen etc.) oder beispielsweise ein völlig anderes Ansprechverhalten und/oder Verbrauchsverhalten aufweist (z. B. besonders sparsam, dafür weniger Beschleunigung, anderes Dynamikverhalten).

Zusammenfassend ermöglicht die Erfindung insbesondere Motoren- und Fahrgeräusche, aber auch sonstiges Ansprechverhalten bei motorgetriebenen Fortbewegungsmitteln nachträglich (z. B. nach Verkauf und Auslieferung des Fortbewegungsmittels) mit Hilfe von zusätzlicher Software zu verändern. Dies bevorzugt in einem eingegrenzten und speziell abgesicherten Bereich, etwa zur Veränderung des "Motorsounds" und/oder von Dynamik, Leistungsprofil, Verbrauch etc.

Die beschriebene Manipulationsmethode besitzt einen geringen Aufwand und ist somit insbesondere zur Durchführung durch einen Endbenutzer des Fortbewegungsmittels geeignet, der hierfür nicht zwingend eine Werkstatt aufsuchen muss. Die Kosten der Manipulation sind somit sehr niedrig.

Heute z. B. bei Kraftfahrzeugen übliche Stellknöpfe (wie z. B. "Sportmodus-Schalter") können durch die Erfindung ergänzt oder sogar überflüssig gemacht werden und/oder können durch intelligente Ansteuerung der individuell gewählten Konfigurationen in vorhandene Mensch-Maschine-Schnittstellen ("HMI") integriert werden. Die Bedienung kann in diesem Fall z. B. über einen ohnehin vorhandenen Bordcomputer oder ein Navigationssystem erfolgen.

Die auf eine Modifikation des Betriebsgeräusches, insbesondere des Motorengeräusches des Fortbewegungsmittels gerichtete Ausführungsform besitzt eine gewisse Ähnlichkeit zum bekannten Herunterladen von Klingeltönen auf Mobiltelefone. Bei der Erfindung werden allerdings nicht die Betriebs- bzw. Motorengeräusche als solche (z. B. ein "Ferrari-Sound", der z. B. als eine Audiodatei zum Abspielen bereitgestellt wird) auf ein beliebiges Auto (z. B. "Volkswagen Golf") geladen, sondern eine Software bzw. Parameterdatensätze, welche die Steuersoftware der Motor- und/oder Getriebe- und/oder anderer Steuereinheiten entsprechend anpassen. Die Bestellung und Bezahlung der hierfür vorgesehenen Manipulationssoftware kann z. B. sehr einfach über Telekommunikationsmechanismen erfolgen, ebenso die Lieferung und Installation, was letztendlich einen Werkstattbesuch entbehrlich macht.

Mit der Erfindung werden vorteilhaft fest voreingestellte Schaltstufen betreffend das Ansprechverhalten des betreffenden Antriebs (z. B. Sportmodus, Sparmodus etc.) überwunden und ganz individuelle Einstellungen ermöglicht, die bislang mehr oder weniger aufwändig waren und oftmals nicht von Endbenutzern durchgeführt werden konnten.

Die Erfindung ermöglicht insbesondere folgende Vorteile:
- Es werden Online-Geschäfte mit "Motorengeräuschen bzw. motorgeräuscherzeugender oder -anpassender Software" zum akustischen Tuning sowie zur Erziehung anderer, durch den Endanwender individuell wählbarer Fahrzeugverhaltensweisen ermöglicht.
- Das Verfahren des Bestellens und Installierens der Manipulationssoftware mit den Tuning-Parametern kann sehr einfach abgewickelt werden, insbesondere unter Nutzung des Internets und/oder von drahtlosen Telekommunikationsmechanismen. Dies spart Personal- und Transaktionskosten und ermöglicht einen schnellen und breiten Zugang zu allen potenziellen Kunden (z. B. alle Autobesitzer).
- Durch eine entsprechende Ausbildung der Steuereinheit bzw. der darin eingespeicherten Steuersoftware können Mechanismen zum Schutz von Copyrights und zum Schutz vor illegalen Raubkopien implementiert werden.
- Ausführungen mit einer Selbstinstallation der Manipulationssoftware einschließlich einer automatischen oder halbautomatischen Veränderung der betreffenden Steuerparameter hilft alle Kosten und Zeitaufwendungen zu vermeiden, die ansonsten bei Veränderungen in einer Werkstatt und/oder durch manuelle Arbeit anfallen würden.
- Dem Hersteller des Fortbewegungsmittels bzw. der Steuersoftware wird ermöglicht, für die Ansteuerung von Sensoren bzw. Aktoren eingeschränkte bzw. speziell abgesicherte Bedatungsbereiche im Steuergerät vorzugeben (bzw. einen bestimmten Manipulationsbereich freizugeben).
- Der Endbenutzer des Fortbewegungsmittels ist nicht mehr an Hersteller-Voreinstellungen gebunden, sondern kann für das Verhalten (z. B. das Fahrverhalten und/oder Fahrgeräusch bei einem Kraftfahrzeug) individuelle Einstellungen erwerben.
- Durch besondere Absicherung im Rahmen der Steuereinheitentwicklung kann für den eingeschränkten Verstellbereich die Herstellergewährleistung aufrechterhalten werden.

## Patentansprüche

1. Steuereinheit zur Steuerung wenigstens einer Antriebskomponente (3) eines motorgetriebenen Fortbewegungsmittels (1), insbesondere Kraftfahrzeugs, umfassend einen Steuerrechner (12), der in Zusammenwirkung mit einer Speichereinrichtung (14) und Eingabe/Ausgabemitteln (16) die Antriebskomponente (3) auf Basis einer in der Speichereinrichtung (14) abgelegten Steuersoftware (18) steuert,
**dadurch gekennzeichnet, dass** die Steuereinheit (10) für eine nachträgliche Veränderbarkeit einer Steuercharakteristik durch Laden einer individuellen Manipulationssoftware (20) in die Speichereinrichtung (14) geeignet ausgebildet ist.

2. Steuereinheit nach Anspruch 1, wobei die Veränderung der Steuercharakteristik eine Veränderung des Betriebsgeräusches des Fortbewegungsmittels (1) bewirkt.

3. Steuereinheit nach einem der vorangehenden Ansprüche, wobei die Veränderung der Steuercharakteristik eine Veränderung des Ansprechverhaltens des Antriebs (3) des Fortbewegungsmittels (1) auf Bedienungsbetätigungen eines Benutzers (26) bewirkt.

4. Steuereinheit nach einem der vorangehenden Ansprüche, wobei die Veränderung der Steuercharakteristik eine Veränderung der Leistungseigenschaften des Antriebs (3) des Fortbewegungsmittels (1) bewirkt.

5. Steuereinheit nach einem der vorangehenden Ansprüche, wobei die Veränderbarkeit der Steuercharakteristik nur in einem vorbestimmt eingegrenzten Bereich ermöglicht ist.

6. Steuereinheit nach einem der vorangehenden Ansprüche, wobei die Manipulationssoftware (20) im Wesentlichen aus Parameterdatensätzen besteht.

7. Steuereinheit nach einem der vorangehenden Ansprüche, wobei ein kabelloses Laden der Manipulationssoftware (20) in die Speichereinrichtung ermöglicht ist.

8. Steuereinheit nach einem der vorangehenden Ansprüche, wobei beim Laden der Manipulationssoftware (20) eine Validierung bzw. Überprüfung vorgesehen ist, z. B. im Hinblick auf Urheberrechte, Eigentumsrechte etc.

9. Verfahren zur Steuerung wenigstens einer Antriebskomponente (3) eines motorgetriebenen Fortbewegungsmittels (1), insbesondere Kraftfahrzeugs, umfassend ein Steuern der Antriebskomponente (3) auf Basis einer in einer Speichereinrichtung (14) abgelegten Steuersoftware (18), durch einen Steuerrechner (12), der mit der Speichereinrichtung (14) und Eingabe/Ausgabemitteln (16) zusammenwirkt,
**dadurch gekennzeichnet, dass** eine Steuercharakteristik durch Laden einer individuellen Manipulationssoftware (20) in die Speichereinrichtung (14) nachträglich veränderbar ist.

10. Verfahren zur Manipulation der Steuercharakteristik einer Steuerung wenigstens einer Antriebskomponente (3) eines motorgetriebenen Fortbewegungsmittels (1) unter Verwendung einer Steuereinheit (10) nach einem der Ansprüche 1 bis 8 und/oder eines Steuerverfahrens nach Anspruch 9.

11. Verfahren nach Anspruch 10, vorgesehen zur Durchführung durch einen Endbenutzer (26) des Fortbewegungsmittels (1).

12. Verfahren nach Anspruch 10 oder 11, wobei eine Bestellung und/oder eine Lieferung der Manipulationssoftware (20) über eine Telekommunikationseinrichtung, insbesondere über Internet, vorgesehen ist.
